# EUROPÄISCHE PATENTSCHRIFT

(11) **EP 3 899 277 B1**
(45) Veröffentlichungstag und Bekanntmachung des Hinweises auf die Patenterteilung: **19.07.2023**
(21) Anmeldenummer: 19832970.8
(22) Anmeldetag: 23.12.2019
(51) Int. Cl.: F04B 39/10, F16K 15/02, F16K 27/02

(54) **POPPETVENTIL**
POPPET VALVE
SOUPAPE À CLAPET

(30) Priorität: 21.12.2018 EP 18215193
(43) Veröffentlichungstag der Anmeldung: 27.10.2021
(73) Patentinhaber: Burckhardt Compression AG, 8404 Winterthur (CH)
(72) Erfinder: SCHULZ, Reiner, 79807 Lottstetten (DE)
(74) Vertreter: Hepp Wenger Ryffel AG
(86) Internationale Anmeldenummer: PCT/EP2019/086995
(87) Internationale Veröffentlichungsnummer: WO 2020/128109

(56) Entgegenhaltungen:
- WO-A1-2017/064155
- GB-A- 578 738
- US-A- 4 489 752
- US-A- 5 873 385
- US-A1- 2001 039 966
- US-A1- 2015 211 500
- US-B2- 9 297 373

## Beschreibung

Die Erfindung betrifft ein Poppetventil gemäss dem Oberbegriff von Anspruch 1.

### Stand der Technik

Die Druckschrift US4489752 offenbart ein Poppetventil für einen Kolbenkompressor nach dem Oberbegriff des Anspruchs 1. Dieses Poppetventil weist einen relativ grossen Verschleiss sowie eine relativ grossen Strömungswiderstand auf. Zudem verhält sich das Ventil beim Öffnen und Schliessen relativ träge. Zudem sind sowohl die Herstellungskosten als auch die Wartungskosten des Poppetventils relativ hoch. Es besteht somit ein Bedarf nach einem effizienterem, kostengünstigerem, wartungsärmerem und/oder wartungsfreundlicherem Poppetventil. WO2017/064155 offenbart auch ein Poppetventil nach dem Stand der Technik.

### Darstellung der Erfindung

Aufgabe der Erfindung ist es ein wirtschaftlich vorteilhafteres Poppetventil für einen Kolbenkompressor auszugestalten.

Diese Aufgabe wird gelöst mit einem Poppetventil aufweisend die Merkmale von Anspruch 1. Die Unteransprüche 2 bis 15 betreffen weitere, vorteilhafte Ausgestaltungen der Erfindung.

Die Aufgabe wird insbesondere gelöst mit einem Poppetventil umfassend einen Ventilkörper mit einer Mehrzahl von Durchlasskanälen, eine Mehrzahl von Schliesselementen, eine Mehrzahl von Führungsmitteln, sowie einen Fänger, wobei jeder Durchlasskanal in einen Ventilsitz mündet, wobei an jedem Führungsmittel jeweils ein Schliesselement in einer Hubrichtung beweglich gelagert ist, wobei jedem Ventilsitz in Hubrichtung gegenüber liegend jeweils ein Schliesselement zugeordnet ist, sodass jeder Ventilsitz durch das jeweils zugeordnete Schliesselement verschliessbar ist, wobei die Führungsmittel mit dem Fänger verbunden sind, wobei jedes Führungsmittel einen Führungsabschnitt mit einen in Hubrichtung verlaufenden Innenhohlraum sowie einen Stützabschnitt umfassend eine Auflagefläche umfasst, wobei die Feder im Innenhohlraum des Führungsabschnittes verläuft und zwischen der Auflagefläche und dem Schliesselement eingespannt ist, wobei jedes Führungsmittel eine zum Ventilsitz hin ausgerichtete erste Anschlagfläche aufweist, wobei jedes Schliesselement eine zur ersten Anschlagfläche hin ausgerichtete zweite Anschlagfläche aufweist, und wobei die erste und zweite Anschlagfläche derart zusammenwirkend angeordnet sind, dass diese den maximalen Hub des Schliesselementes in Hubrichtung begrenzen.

Die Aufgabe wird weiter insbesondere gelöst mit einem Poppetventil umfassend einen Ventilkörper mit einer Mehrzahl von Durchlasskanälen, einer Mehrzahl von Schliesselementen, einer Mehrzahl von Führungsmitteln, sowie einen Fänger, wobei jeder Durchlasskanal in einen Ventilsitz mündet, wobei an jedem Führungsmittel jeweils ein Schliesselement in einer Hubrichtung beweglich gelagert ist, wobei jedem Ventilsitz in Hubrichtung gegenüber liegend jeweils ein Schliesselement zugeordnet ist, sodass jeder Ventilsitz durch das jeweils zugeordnete Schliesselement verschliessbar ist, wobei jedes Führungsmittel in Hubrichtung nacheinander folgend einen Führungsabschnitt, einen Stützabschnitt und einen Befestigungsabschnitt umfasst, wobei jedes Führungsmittel über den Befestigungsabschnitt mit dem Fänger verbunden ist, wobei der Führungsabschnitt einen in Hubrichtung verlaufenden Innenhohlraum umfasst, und wobei der Stützabschnitt eine Auflagefläche umfasst, wobei eine Feder im Innenhohlraum des Führungsabschnittes verläuft und zwischen der Auflagefläche und dem Schliesselement eingespannt ist, und wobei das Führungsmittel einen einzigen Führungsabschnitt aufweist, der sich in Hubrichtung erstreckt, wobei jedes Führungsmittel eine zum Ventilsitz hin ausgerichtete erste Anschlagfläche aufweist, wobei jedes Schliesselement eine zur ersten Anschlagfläche hin ausgerichtete zweite Anschlagfläche aufweist, wobei die erste und zweite Anschlagfläche derart zusammenwirkend angeordnet sind, dass diese den maximalen Hub des Schliesselementes in Hubrichtung begrenzen, und wobei der Befestigungsabschnitt eine in beide Richtungen der Hubrichtung wirkende, formschlüssige Verbindung zum Fänger ausbildet. Unter formschlüssiger Verbindung wird eine Verbindung verstanden, die durch das Ineinandergreifen von mindestens zwei Verbindungspartnern entsteht. Dadurch können sich die Verbindungspartner auch ohne oder bei unterbrochener Kraftübertragung nicht lösen.

Das erfindungsgemässe Poppetventil weist den Vorteil auf, dass das Schliesselement nicht mehr direkt am Fänger aufschlägt, was den Verschleiss des Schliesselementes sowie den Verschleiss des Fängers reduziert. Das erfindungsgemässe Poppetventil umfasst ein Führungsmittel mit einer ersten Anschlagfläche sowie ein Schliesselement mit einer zweiten Anschlagfläche, wobei die beiden Anschlagflächen derart gegenseitig angepasst angeordnet sind, dass diese den maximalen Hub des Schliesselementes begrenzen. Zudem hat diese Ausgestaltung zur Folge, dass während des Betriebs des Poppetventils hauptsächlich das Führungsmittel und das Schliesselement einem Verschleiss unterliegen, wobei das Führungsmittel sowie das Schliesselement vorteilhafterweise auf einfache Weise ersetzbar sind. Das erfindungsgemässe Poppetventil weist zudem den Vorteil auf, dass dessen Schliesselemente relativ massearm ausgestaltet sein können. Dies reduziert die während des Abbremsens des Schliesselementes auftretenden Kräfte, insbesondere die auf den Ventilkörper einwirkenden Kräfte, und die auf den Fänger einwirkenden Kräfte. Diese reduzierten Kräfte haben einerseits einen geringeren Verschleiss von Schliesselement, Ventilkörper und/oder Führungsmittel zur Folge, und ermöglichen es vorzugsweise auch, den Ventilkörper und/oder den Fänger mit geringerer Masse und/oder mit geringerer Steifigkeit auszubilden. Somit ist es möglich den Ventilkörper und/oder den Fänger mit einer Mehrzahl bzw. einer Vielzahl von Durchlassöffnungen zu versehen, und trotzdem eine genügend grosse Steifigkeit und einen langfristig zuverlässigen Betrieb des Poppetventils zu gewährleisten. Jeder Durchlassöffnung des Ventilkörpers ist ein separates Schliesselement zugeordnet. Das erfindungsgemässe Poppetventil weist den weiteren Vorteil auf, dass dieses eine Vielzahl von Durchlassöffnungen und Schliesselemente aufweisen kann. In einer vorteilhaften Ausgestaltung umfasst das erfindungsgemässe Poppetventil zwischen 10 und 50 Durchlassöffnungen sowie dieselbe Anzahl Schliesselemente, und besonders bevorzugt zwischen 20 und 40 Durchlassöffnungen bzw. Schliesselemente. Diese relativ hohe Anzahl von Durchlassöffnungen und Schliesselementen weist den Vorteil auf, dass die Durchlassöffnungen sowie die Schliesselemente einen relativ geringen Durchmesser aufweisen, was einerseits die Masse des Schliesselementes reduziert, und was andererseits den durch das Poppetventil fliessende Fluidstrom gleichmässiger über die Stirnseite des Poppetventils verteilt, wodurch der Strömungswiderstand des Poppetventils reduziert wird. Schliesselemente mit geringer Masse weisen zudem den Vorteil auf, dass diese entsprechend den angreifenden Kräften sehr schnell reagieren und in Hubrichtung bewegt werden, sodass das erfindungsgemässe Poppetventil eine kurze Reaktionszeit der Schliesselemente aufweist.

Das erfindungsgemässe Poppetventil umfasst Führungsmittel, wobei jedes Führungsmittel einen Befestigungsabschnitt aufweist, der unter Ausbildung einer in beide Richtungen der Hubrichtung wirkenden, formschlüssigen Verbindung mit dem Fänger befestigt ist, beziehungsweise am Fänger befestigbar ist. Diese formschlüssige Verbindung gewährleistet, dass das Führungsmittel sicher am Fänger befestigt ist.

Vorteilhafterweist weist der Fänger in Hubrichtung eine konstante Breite aufweist. Vorteilhafterweise besteht der Fänger aus einem tafelförmigen Material, vorzugsweise mit einer Dicke im Bereich von 3 bis 6 mm, besonders vorteilhaft im Bereich von 4 bis 5 mm. Besonders vorteilhaft besteht der Fänger aus einem metallischen Blech.

Der Befestigungsabschnitt ist vorteilhafterweise als ein Einrastverbindungsteil ausgestaltet, besonders vorteilhaft als ein lösbares Einrastverbindungsteil, sodass das Führungsmittel auf einfache Weise vom Fänger gelöst und vorzugsweise durch ein neues Führungsmittel ersetzt werden kann. Das Führungsmittel und vorzugsweise auch das Schliesselement sind vorzugsweise als Ersatzteile ausgestaltet, sodass diese nach einer gewissen Zeitdauer und / oder bei einem aufgetretenen Verschleiss auf einfache Weise ersetzt werden können.

Das erfindungsgemässe Poppetventil umfasst für jeden Durchlasskanal ein separates, zugeordnetes Schliesselement sowie ein jedem Schliesselement zugeordnetes Führungsmittel, welches das jeweilige Schliesselement in Hubrichtung führt. In einer besonders vorteilhaften Ausgestaltung sind die Schliesselemente und die Führungsmittel auf einfache Weise austauschbar, und vorteilhafter Weise zudem individuell austauschbar, sodass bei einer Wartung auf einfache Weise entweder alle Schliesselemente und/oder alle Führungsmittel ersetzt werden, oder dass bei einer Wartung nur diejenigen Schliesselemente und/oder Führungsmittel ersetzt werden, welche entsprechend des vorhandenen Verschleisses ersetzt werden sollten. Vorteilhafterweise sind die Führungsmittel auf einfache Weise lösbar mit dem Fänger verbunden, beispielsweise über eine Klippverbindung oder eine Einrastverbindung, sodass die Führungsmittel während einer Wartung auf einfache Weise vom Fänger lösbar und austauschbar sind.

Jedes Schliesselement ist vom zugeordneten Führungselement in Hubrichtung beweglich geführt. In einer vorteilhaften Ausgestaltung umschliesst das Schliesselement das Führungselement von aussen, sodass das Führungselement in Hubrichtung zumindest teilweise innerhalb des Schliesselementes angeordnet ist. Diese Ausgestaltung weist beispielsweise den Vorteil auf, dass am Führungselement kaum Schmutzablagerungen entstehen, welche sich aufgrund von Schmutzpartikeln des durchströmenden Fluids ergeben könnten. In einer weiteren, vorteilhaften Ausgestaltung umschliesst das Führungselement das Schliesselemente von aussen, sodass das Schliesselement in Hubrichtung zumindest teilweise innerhalb des Führungselementes angeordnet ist. Diese Ausgestaltung weist beispielsweise den Vorteil auf, dass das Schliesselement aus einem Kunststoff bestehen kann, wobei der Kunststoff vorzugsweise derart gewählt ist, dass dieser beim Anschlagen an den Ventilkörper bzw. an den Ventilsitz einen geringen Verschleiss verursacht. In einer vorteilhaften Ausgestaltung wird eine Materialpaarung von Ventilsitz und Schliesselement derart gewählt, dass sich das Schliesselement während des Betriebs des Poppetventils wesentlich stärker verschleisst als der Ventilsitz, indem das Schliesselement beispielsweise aus einem Kunststoff besteht, und der Ventilsitz bzw. der Ventilkörper aus einem Metall besteht. Da das Schliesselement einfach und kostengünstig ersetzbar ist, gewährleistet diese Ausführungsform einen langfristig zuverlässigen und kostengünstigen Betrieb des Poppetventils.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: einen perspektivischen Längsschnitt eines ersten Ausführungsbeispiels eines Poppetventils;
- Fig. 2: eine perspektivische Unteransicht des Poppetventils gemäss Figur 1;
- Fig. 3: eine Detailansicht des Poppetventils gemäss Figur 1 jedoch ohne Feder;
- Fig. 4: die Ansicht gemäss Figur 3, jedoch ohne Schliesselement und Ventilkörper;
- Fig. 5: das Schliesselement gemäss Figur 3;
- Fig. 6: einen perspektivischen Längsschnitt durch ein zweites Ausführungsbeispiels eines Poppetventils;
- Fig. 7: eine perspektivische Unteransicht des Poppetventils gemäss Figur 6;
- Fig. 8: eine Detailansicht des Poppetventils gemäss Figur 6;
- Fig. 9: die Ansicht gemäss Figur 8, jedoch ohne Schliesselement, Feder und Ventilkörper;
- Fig. 10: das Schliesselement gemäss Figur 8;
- Fig. 11: eine Frontansicht der Schliesselemente des Poppetventils gemäss Figur 6.

Grundsätzlich sind in den Zeichnungen gleiche Teile mit gleichen Bezugszeichen versehen.

### Wege zur Ausführung der Erfindung

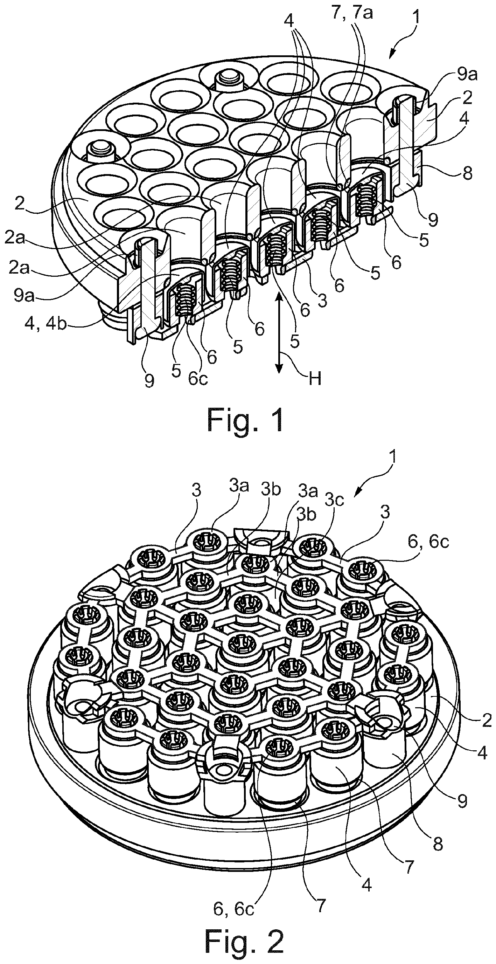

Fig. 1 zeigt einen perspektivischen Längsschnitt eines ersten Ausführungsbeispiels eines Poppetventils 1. Das Poppetventil 1 umfasst einen Ventilkörper 2 mit einer Mehrzahl von Durchlasskanälen 2a, welche in je einen Ventilsitz 7 münden. Gegenüberliegend den Ventilsitzen 7 ist jeweils ein in Hubrichtung H bewegliches Schliesselement 4 angeordnet, wobei jedes der Schliesselemente 4 einen Schliesskopf 4b umfasst, welcher den jeweiligen Ventilsitz 7 bzw. den jeweiligen Durchlasskanal 2a abdichtet, wenn der Schliesskopf 4b am Ventilsitz 7 anliegt. Die Schliesselemente 4 sind über je eine Führungsmittel 6 in Hubrichtung H beweglich gelagert. Jedes Führungsmittel 6 ist mit einem Fänger 3 verbunden, wobei der Fänger 3 über ein Distanzteil 8 und ein Befestigungsmittel 9 mit Mutter 9a fest mit dem Ventilkörper 2 verbunden ist, sodass der Fänger 3 und somit auch die Führungsmittel 6 und die Schliesselemente 4 in einer definierten Lage betreffend dem Ventilkörper 2 angeordnet sind, nämlich derart, dass die Schliesselemente 4 den jeweiligen in Hubrichtung H gegenüberliegenden Ventilsitz 7 durch eine entsprechende Bewegung in Hubrichtung H öffnen bzw. schliessen können. Im dargestellten Ausführungsbeispiel umfasst der Ventilsitz 7 ein ringförmiges Ventilsitzteil 7a, welches derart angeordnet und ausgestaltet ist, dass das Schliesselement 4 beim Schliessen ausschliesslich mit dem Ventilsitzteil 7a in Berührung kommt. Das Ventilsitzteil 7a ist vorzugsweise als Verschleissteil ausgestaltet, sodass die im Ventilsitz 7 angeordneten Ventilsitzteile 7a ersetzt werden können, insbesondere falls ein aufgetretener Verschleiss dies erfordert. Die Ventilsitzteile 7a sind vorzugsweise aus einem Kunststoff gefertigt, beispielsweise PTFE, PEEK, FFKM oder auch aus einer weichen Metalllegierung z.B. einer Kupfer- oder Indiumlegierung. In jeder Kombination von Schliesselemente 4 und Führungsmittel 6 ist jeweils eine Feder 5 angeordnet. Die Feder ist, wie in Figur 1 dargestellt, innerhalb des Führungsmittels 6 verlaufend angeordnet, und bewirkt eine zum Ventilkörper 2 hin ausgerichtete Vorspannkraft auf das Schliesselemente 4, sodass die Schliesselemente 4 in einem Ruhezustand des Poppetventils 1 am Ventilsitz 7a bzw. am Ventilkörper 2 anliegen. Figur 1 zeigt das Poppetventil 1 in einem geöffneten Zustand, bei welchem ein Fluid von oben nach unten durch den Ventilkörper 2 strömt, und die Schliesselemente 4 deshalb vom Ventilsitz 7a abgehoben sind.

Figur 2 zeigt eine perspektivische Untenansicht des in Figur 1 dargestellten Poppetventils 1. Der Fänger 3 ist als eine Gitterstruktur ausgestaltet, umfassend Gitterknoten 3a, Streben 3b und Zwischenräume 3c. Vorteilhafterweise ist, wie in Figur 2 dargestellt, jeweils an einem Gitterknoten 3a jeweils ein einziges Führungsmittel 6 befestigt. Die Gitterstruktur des Fängers 3 weist in einer bevorzugten Ausgestaltung relativ grossflächige Zwischenräume 3c auf, was einen geringen Durchflusswiderstand des Fängers 3 zur Folge hat. Der Fänger 3 ist über ein Distanzteil 8 und ein Befestigungsmittel 9 in einem definierten Abstand und in einer definierten Lage bezüglich des Ventilkörpers 2 fest angeordnet. Der Fänger 3 besteht vorzugsweise aus Metall oder aus Kunststoff.

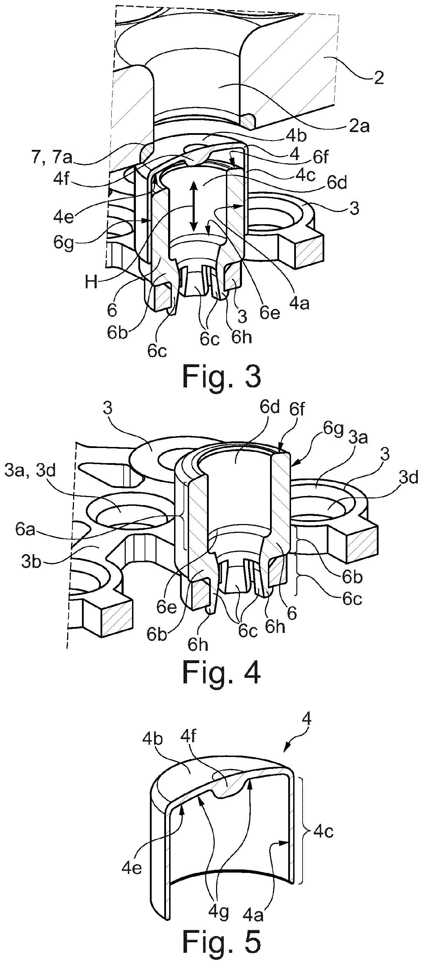

Figur 3 zeigt in einer Detailansicht ein einziges Schliesselement 4 sowie das dazugehörige Führungsmittel 6 und zeigt den zugeordneten Durchlasskanal 2a des Ventilkörpers 2. Die sich im Innenhohlraum 6d befindliche Feder 5 ist nicht dargestellt, um die übrigen Elemente besser sichtbar darzustellen. Figur 3 zeigt nicht denselben Schnitt wie Figur 1 darstellt.

Der Ventilkörper 2 umfasst den Durchlasskanal 2a sowie den Ventilsitz 7 mit ringförmigem Ventilsitzteil 7a. An jedem Führungsmittel 6 ist jeweils ein Schliesselement 4 in Hubrichtung H beweglich gelagert. Jedem Ventilsitz 7 ist in Hubrichtung H gegenüber liegend jeweils das Schliesselement 4 zugeordnet. Jeder Ventilsitz 7 ist durch das jeweils zugeordnete Schliesselement 4 verschliessbar, wobei die Führungsmittel 6 mit dem Fänger 3 verbunden sind. Jedes Führungsmittel 6 umfasst einen Führungsabschnitt 6a, einen Stützabschnitt 6b sowie einen Befestigungsabschnitt 6c. Der Führungsabschnitt 6a umfasst einen in Hubrichtung H verlaufenden Innenhohlraum 6d. Der Stützabschnitt 6b umfasst eine Auflagefläche 6e, wobei die nur in Figur 1 dargestellte Feder 5 im Innenhohlraum 6d des Führungsabschnittes 6a verläuft und zwischen der Auflagefläche 6e und dem Schliesskopf 4b des Schliesselements 4 eingespannt ist. Das Führungsmittel 6 weist eine zum Ventilsitz 7 hin ausgerichtete erste Anschlagfläche 6f auf, und das Schliesselement 4 weist eine zur ersten Anschlagfläche 6f hin ausgerichtete, zweite Anschlagfläche 4e auf. Die erste und zweite Anschlagfläche 6f, 4e sind derart zusammenwirkend angeordnet, dass diese den maximalen Hub des Schliesselementes 4 in Hubrichtung H begrenzen. Die Höhe des Schliesselementes 4 in Hubrichtung H ist derart gewählt, dass das Schliesselement 4 nur oben, mit dessen Anschlagfläche 4e am Führungsmittel 6 anschlägt, wobei das Führungsteil 4c in keiner dem Schliesselement 4 möglichen Stellung mit dem Fänger 3 in direkte Berührung kommt, sodass das Schliesselement 4 auch nicht am Fänger 3 anschlägt. Dies ergibt den Vorteil, dass der Fänger 3 keinem oder einem vernachlässigbar geringen, durch das Schliesselement 4 bedingten Verschleiss unterliegt.

In einer vorteilhaften Ausführungsform besteht das Schliesselement 4, wie in den Figuren 1 und 3 dargestellt, aus einem hohlzylinderförmigen Führungsteil 4c sowie einem Schliesskopf 4b, wobei das Schliesselement 4 einstückig ausgestaltet ist, und vorzugsweise aus einem tiefgezogenen Metall besteht. Vorteilhafterweise weist das Führungsmittel 6 eine zylinderförmige, nach aussen ausgerichtete erste Gleitfläche 6g auf. Das Führungsteil 4c weist eine zylinderförmige, nach innen ausgerichtete zweite Gleitfläche 4a auf. Das Schliesselemente 4 sowie das Führungsmittel 6 sind derart gegen gleich ausgestaltet, dass die erste Gleitfläche 6g und die zweite Gleitfläche 4a gegenseitige Gleitflächen Ausbildung, entlang welchen das Schliesselemente 4 bezüglich dem Führungsmittel 6 in Hubrichtung H hin und her beweglich gleitend gelagert ist.

Das Schliesselement 4 ist vorzugsweise einteilig ausgestaltet, wobei das Schliesselement 4 den Schliesskopf 4b sowie das anschliessend an den Schliesskopf 4b in Hubrichtung H verlaufende hohlzylinderförmige Führungsteil 4c umfasst, wobei der Schliesskopf 4b auf der dem Ventilsitz 7 abgewandten Seite die zweite Anschlagfläche 4e umfasst. Der Führungsabschnitt 6a weist eine zum Ventilkörper 2 hin ausgerichtete Stirnseite aufweist, welche die erste Anschlagfläche 6f ausbildet.

Figur 4 zeigt einen Teil des Fängers 3 sowie ein einziges, mit dem Fänger 3 verbundenes Führungsmittel 6 im Detail. Der Fänger 3 ist als Gitterstruktur ausgestaltet, umfassend Gitterknoten 3a, Streben 3b und Öffnungen 3d in den Gitterknoten 3a. In einer vorteilhaften Ausgestaltung umfasst das Führungsmittel 6 einem Befestigungsabschnitt 6c, mithilfe dessen das Führungsmittel 6 am Fänger 3 befestigbar ist, und vorzugsweise auch wieder lösbar ist. In einer vorteilhaften Ausgestaltung umfasst der Befestigungsabschnitt 6c, wie in den Figuren 3 und 4 dargestellt, eine Mehrzahl von Klipp- bzw. Einrastverbindungsteilen 6h, welche je einen Widerhaken aufweisen, sodass der Befestigungsabschnitt 6c in die kreisförmige Öffnung 3d des Gitterknotens 3a eingeführt werden kann, und die Widerhaken am Fänger 3 anliegen, sodass das Führungsmittel 6 fest, und vorzugsweise wieder lösbar, mit dem Fänger 3 verbunden ist.

Figur 5 zeigt das bereits in Figur 3 dargestellte Schliesselement 4 im Detail. In einer vorteilhaften Ausgestaltung erstreckt sich das Führungsteil 4c, welches die zweite Gleitfläche 4a ausbildet, entlang der gesamten Bauhöhe des Schliesselementes 4. In den Figuren 3 und 4 ist die an sich für das Schliesselement 4 erforderliche Feder 5 nicht dargestellt. Das Führungsmittel 6 umfasst eine Auflagefläche 6e, an welcher, wie in Figur 1 dargestellt, das eine Ende der Feder 5 anliegt, wobei das andere Ende der Feder 5 auf der Innenseite des Schliesskopfes 4b anliegt, vorzugsweise an einer Auflagefläche 4g, um dadurch auf das Schliesselemente 4 eine zum Ventilkörper 2 hin wirkende Vorspannkraft zu bewirken. Vorteilhafterweise umfasst das Schliesselement 4 ein vorstehendes Zentrierteil 4f, welches die Lage der Feder 5 bezüglich dem Schliesskopf 4b zentriert. Das Schliesselement 4 ist vorzugsweise sehr leicht ausgestaltet, und weist beispielsweise ein Gewicht im Bereich von 1 bis 20 Gramm auf. In einer vorteilhaften Ausgestaltung besteht das Schliesselemente 4 aus einem Metall. Besonders vorteilhaft wird das Schliesselement 4 aus einem Blech durch Tiefziehen gefertigt, wobei das Blech vorzugsweise eine Dicke im Bereich von 0.25 bis 1.5 mm aufweist. Das metallische Schliesselement 4 weist vorzugsweise eine Wandstärke im Bereich von 0.25 bis 1.5 mm auf, und besonders bevorzugt eine Wandstärke im Bereich von 0.3 bis 1 mm. Das metallische Schliesselement 4 weist vorzugsweise ein Gewicht im Bereich zwischen 5 und 15 Gramm auf, und vorzugsweise ein Gewicht im Bereich zwischen 8 und 12 Gramm. Ein derartiges Schliesselement 4 ist äusserst kostengünstig herstellbar. Ein derart leichtes Schliesselement 4 weist eine geringe Massenträgheit auf, und lässt sich deshalb sehr schnell bewegen. Das Schliesselement 4 könnte auch aus einem Kunststoff gefertigt sein. Das Schliesselement weist vorzugsweise einen Durchmesser im Bereich von 8 mm bis 15 mm aufweist, und insbesondere einen Durchmesser im Bereich von 10 bis 12 mm. Die erste Anschlagfläche 6f weist radial zur Hubrichtung H eine Breite aufweist, die vorzugsweise mindestens doppelt so gross ist wie die Wandstärke des Schliesselements 4. Das Führungsmittel besteht vorzugsweise aus einem Kunststoff.

Wie aus Figur 3 ersichtlich, kann das erfindungsgemässe Poppetventil 1 auf eine sehr einfache Weise gewartet werden, in dem in einem ersten Verfahrensschritt der Fänger 3 vom Ventilkörper 2 gelöst wird, sodass der Fänger 3 und die mit ihm verbundenen Führungsmittel 6 sowie deren Schliesselemente 4 vom Ventilkörper 2 entfernt werden können. Daraufhin können, falls erforderlich, auf einfache Weise die Ventilsitzringe 7a ersetzt werden. Zudem können, falls erforderlich, auf einfache Weise die Schliesselemente 4 ersetzt werden. Zudem können vorgängig, falls erforderlich, zumindest eines der Führungsmittel 6, und vorzugsweise alle Führungsmittel 6, vom Fänger 3 gelöst werden, und durch neue Führungsmittel 6 ersetzt werden. Daraufhin ist die Feder 5 in den Innenraum des Führungsmittels 6 einzuführen, um danach jeweils ein Schliesselement 4 über das entsprechende Führungsmittel 6 zu stülpen. Daraufhin können der Ventilkörper 2 und der Fänger 3 wieder fest miteinander verbunden werden, sodass die Wartung des erfindungsgemässen Poppetventils 1 bereits abgeschlossen ist.

Bei dem in den Figuren 1 bis 5 dargestellten Ausführungsbeispiel sind die erste Gleitfläche 6g und die zweite Gleitfläche 4a zylinderförmig ausgestaltet. Diese beiden Gleitflächen 6a, 4a können auch andere Formen aufweisen, welche derart ausgestaltet sind, dass diese eine Gleitbewegung in Hubrichtung H erlauben. Beispielsweise könnte das Führungsmittel 6 und das Schliessmittel 4 auch einen ovalen, dreieckigen, viereckigen oder vieleckigen Querschnitt aufweisen, welche derartige Gleitflächen 6a, 4a, ausbilden, dass eine Gleitbewegung in Hubrichtung H möglich ist.

In einer möglichen Ausgestaltung könnte das Schliesselement 4 im Bereich des Führungsteils 4c Löcher aufweisen, um eine Fluide leitende Verbindung zwischen Innenraum und Aussenraum des Schliesselementes 4 zu erlangen. Eine derartige Ausgestaltung kann den Vorteil aufweisen, dass innerhalb des Schliesselementes 4 bzw. des Führungsmittels 6 zumindest zeitweise eine fluide Strömung erzeugt wird, welche allfällig sich ablagernde Verschmutzungen entfernen könnte.

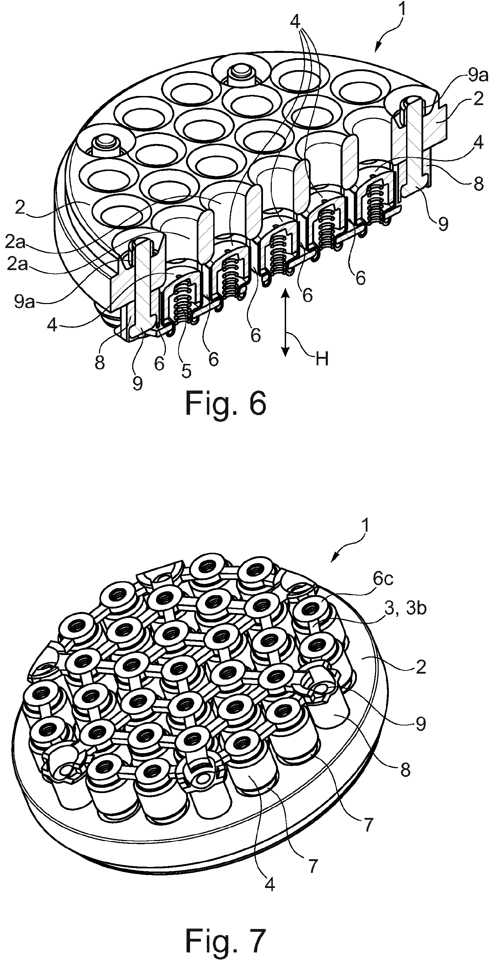

Figur 6 zeigt in einem perspektivischen Längsschnitt ein zweites Ausführungsbeispiel eines Poppetventils 1. Das in Figur 1 dargestellte Poppetventil 1 und das in Figur 6 dargestellte Poppetventil 1 unterscheiden sich insbesondere dadurch, dass die Schliesselemente 4 und die Führungsmittel 6 unterschiedlich ausgestaltet sind. Ansonsten sind die beiden Poppetventile, allenfalls mit Ausnahme des Ventilsitzes 7 und dem ringförmigen Ventilsitzteil 7a, im Wesentlichen identisch ausgestaltet.

Figur 7 zeigt eine Unteransicht des Poppetventils 1 gemäss Figur 6. Der Fänger 3 ist über ein Distanzteil 8 und ein Befestigungsteil 9 fest mit dem Ventilkörper 2 verbunden. Die Führungsmittel 6 sind über einen Befestigungsabschnitt 6c, welcher als Nietverbindung umfassend ein Nietverbindungsteil 6i ausgestaltet ist, mit dem Fänger 3 fest verbunden.

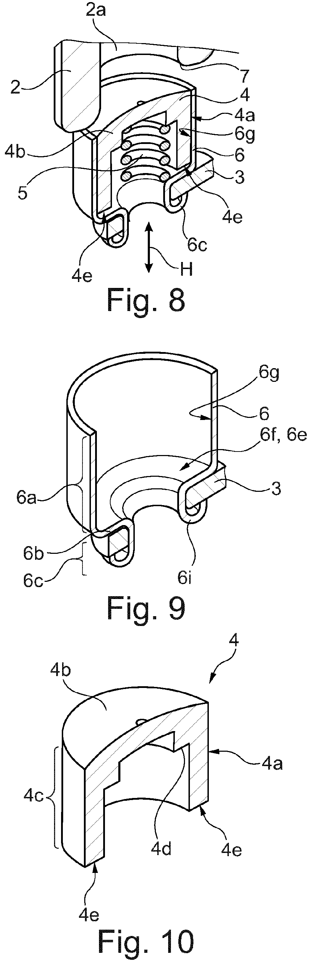

Figur 8 zeigt in einer Detailansicht ein einziges Schliesselement 4 sowie das dazugehörige Führungsmittel 6 und die dazugehörige Feder 5, und zeigt den zugeordneten Durchlasskanal 2a des Ventilkörpers 2. Zudem zeigt Figur 8 im Detail, wie diese im Poppetventil gemäss Figur 6 gegenseitig angeordnet sind. Figur 8 zeigt denselben Schnitt wie in Figur 6 darstellt. Der Ventilkörper 2 umfasst den Durchlasskanal 2a wobei in diesem Ausführungsbeispiel im Ventilsitz 7 kein ringförmiges Ventilsitzteil 7a angeordnet ist. In Hubrichtung H ist dem Ventilsitz 7 gegenüberliegend das Schliesselement 4 angeordnet, welches an einem Führungsmittel 6 in Hubrichtung H verschiebbar gelagert ist. Wie in Figur 10 dargestellt besteht das Schliesselement 4 aus einem hohlzylinderförmigen Führungsteil 4c sowie einem Schliesskopf 4b, wobei der Schliesskopf 4b den vom Führungsteil 4c umschlossenen Innenraum zum Ventilsitz 7 hin abschliesst. Wie in Figur 9 dargestellt umfasst das Führungsmittel 6 einen Führungsabschnitt 6a, einen Stützabschnitt 6b sowie einen Befestigungsabschnitt 6c. Der Führungsabschnitt 6a ist hohlzylinderförmig ausgestaltet und weist eine zylinderförmige, nach innen ausgerichtete erste Gleitfläche 6g auf. Das Führungsteil 4c weist eine zylinderförmige, nach aussen ausgerichtete zweite Gleitfläche 4a auf. Wie in Figur 8 dargestellt umschliesst das Führungsteil 6 das Schliesselement 4 in Umfangsrichtung, wobei das Schliesselemente 4 sowie das Führungsmittel 6 derart gegen gleich ausgestaltet sind, dass die erste Gleitfläche 6g und die zweite Gleitfläche 4a gegenseitige Gleitflächen ausbilden, entlang welchen das Schliesselemente 4 bezüglich dem Führungsmittel 6 in Hubrichtung H hin und her beweglich gleitend gelagert ist. Der Stützabschnitt 6b bildet eine erste Anschlagfläche 6f aus. Die Stirnseite des Schliesselements 4 bildet eine zweite Anschlagfläche 4e aus. Die erste und zweite Anschlagfläche 6f, 4e sind gegenseitig derart angeordnet, dass diese bei einer Bewegung in Hubrichtung H aufeinandertreffen können, und dabei den Hub des Schliesselementes 4 in Hubrichtung H begrenzen. Das Führungsmittel 6 besteht vorzugsweise aus Metall, und besteht vorzugsweise aus einem tiefgezogenen Blech. Falls das Führungsmittel 6 aus Metall besteht, so weist dieses vorzugsweise eine Wandstärke im Bereich von 0.25 bis 1.5 mm auf, und besonders bevorzugt eine Wandstärke im Bereich von 0.3 bis 1 mm. Das Führungsmittel 6 umfasst den Befestigungsabschnitt 6c, der vor der Montage beispielsweise hülsenförmig ausgestaltet ist, sodass der Befestigungsabschnitt 6c in einem ersten Verfahrensschritt in den Fänger 3 eingeführt wird, und danach in einem zweiten Verfahrensschritt umgebogen wird, sodass der Befestigungsabschnitt 6c, wie in den Figuren 8 und 9 dargestellt, eine Art Nietverbindung ausbildet, über welche das Führungsmittel 6 am Fänger 3 befestigt ist. Die Auflagefläche 6e bildet zudem die erste Anschlagfläche 6f aus. Die Feder 5 ist zwischen der ersten Anschlagfläche 6f und der Innenfläche des Schliesskopfs 4b eingespannt.

Das metallische Führungsmittel (6) weist vorzugsweise eine Wandstärke im Bereich von 0,25 mm bis 1,5 mm aufweist, und besonders vorteilhaft eine Wandstärke im Bereich von 0,3 mm bis 1 mm. Das Führungsmittel weist vorteilhafterweise einen Durchmesser im Bereich von 8 mm bis 15 mm auf, und besonders vorteilhaft einen Durchmesser im Bereich von 10 bis 12 mm. Die erste Anschlagfläche 6f radial zur Hubrichtung H weist vorteilhafterweise eine Breite auf, die mindestens doppelt so gross ist wie die Wandstärke des Führungsmittels 6.

Das in Figur 10 dargestellte Schliesselement 4 besteht vorzugsweise aus einem Kunststoff, kann jedoch auch aus Metall bestehen.

Der Ventilkörper 2 könnte aus einem Kunststoff oder aus Metall gefertigt sein. Sofern das Schliesselement 4 aus Kunststoff besteht, kann gegebenenfalls, wie in Figur 8 dargestellt, auf das ringförmige Ventilsitzteil 7a verzichtet werden, weil solche Schliesselemente 4 vorzugsweise einen nur geringen Verschleiss des Ventilsitzes 7 bewirken. Das Schliesselement 4 könnte jedoch auch aus Metall bestehen. Das Führungsmittel 6 kann in einer Vielzahl von Möglichkeiten mit dem Fänger 3 verbunden sein. Das Führungsmittel 6 könnte auch aus einem Kunststoff gefertigt sein, und könnte beispielsweise auch einen Befestigungsabschnitt 6c mit Einrastverbindungsteil 6h aufweisen, wie dies in den Figuren 3 und 4 dargestellt ist, sodass das Führungsmittel 6 über eine Klippverbindung 6c mit dem Fänger 3 verbindbar ist.

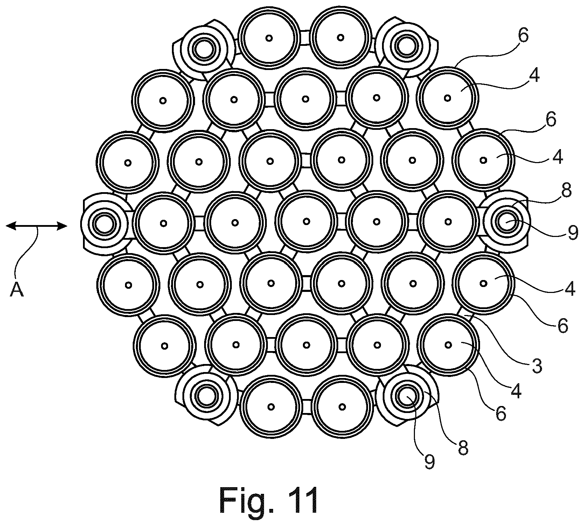

Figur 11 zeigt eine Draufsicht des Poppetventils 1 gemäss Figur 6 bei vollständig entferntem Ventilkörper 2. Das Poppetventil 1 umfasst einen Fänger 3 an welchem 31 Führungsmittel 6 angeordnet sind, wobei in jedem Führungsmittel 6 ein Schliesselemente 4 mit zum Ventilkörper 2 hin ausgerichteten Schliesskopf 4a angeordnet ist. Die in Figur 11 dargestellte Anordnung ist mithilfe der Distanzteile 8 und der Befestigungsmittel 9 fest und vorzugsweise lösbar mit dem nicht dargestellten Ventilkörper 2 verbunden. In einer vorteilhaften Ausgestaltung ist die in Figur 11 dargestellte Anordnung, allenfalls ohne Distanzteil 8 und Befestigungsmitteln 9, als vorkonfiguriertes Ersatzteil für das Poppetventil 1 ausgestaltet, sodass dieses nur noch mit dem Ventilkörper 2 zu verbinden ist, um durch diese Wartungsmassnahme zu einem vorzugsweise wieder neuwertigen Poppetventil 1 zu gelangen.

Das erfindungsgemässe Poppetventil 1 kann kostengünstig mit einer Vielzahl von Durchlasskanälen 2a und einer Vielzahl von Schliesselementen 4 ausgestattet sein. In einer vorteilhaften Ausgestaltung umfasst das Poppetventil 1 entlang des Durchmessers zwischen 3 bis 12 Durchlasskanäle 2a und Schliesselemente 4, besonders vorteilhaft zwischen 4 bis 7 Durchlasskanäle 2a und Schliesselemente 4. In Figur 11 sind entlang des Durchmessers, in Richtung A, fünf Schliesselemente 4 angeordnet, sodass der nicht dargestellte Ventilkörper 2 ebenfalls fünf Durchlasskanäle 2a aufweist. Figur 11 zeigt eine Anordnung mit 32 Schliesselementen 4. Das erfindungsgemässe Poppetventil 1 weist in einer vorteilhaften Ausgestaltung eine Anzahl Schliesselemente 4 im Bereich zwischen 14 und 45 auf, und dieselbe Anzahl Durchlasskanäle 2a.

Die in den Figuren 1 und 6 dargestellten Ausführungsbeispiele von Poppetventilen 1 zeigen Ausführungsformen, bei welchen das Führungsmittel 6 mit dem Fänger 3 verbindbar ist, und bei welchen das Führungsmittel 6 vorteilhafterweise auch wieder vom Fänger 3 lösbar ist. In einer weiteren vorteilhaften Ausgestaltung bilden die Führungsmittel 6 Teil des Fängers 3, sodass die Führungsmittel 6 fest und untrennbar mit dem Fänger 3 verbunden sind. Eine derartige Ausführungsform weist den Vorteil auf, dass bei einer Wartung durch ein Ersetzen des Fängers 3 zugleich alle Führungsmittel 6 ersetzt werden. In einer weiteren vorteilhaften Ausgestaltung ist ein Ersatzteil vorgesehen, welches den Fänger 3 sowie alle dazugehörigen Führungsmittel 6, Schliesselemente 4 und Federn 5 umfasst. In einer möglichen Ausgestaltung ist dieses Ersatzteil als Bausatz ausgestaltet, in dem die einzelnen Komponenten noch zusammengefügt werden müssen. In einer besonders vorteilhaften Ausgestaltung ist dieses Ersatzteil bereits vorkonfektioniert, sodass zur Wartung des Poppetventils 1 nur noch der Fänger 3 vom Ventilkörper 2 gelöst werden muss, und dass vorkonfektionierte Ersatzteil umfassend den Fänger 3 sowie die dazugehörigen Führungsmittel 6, Schliesselemente 4 und Federn 5 am Ventilkörper 2 befestigt werden muss. Bei diesem Ersatzteil können die Führungsmittel 6 Teil des Fängers 3 sein. In einer weiteren möglichen Ausgestaltung können bei diesem Ersatzteil die Führungsmittel 6, wie in den Figuren 1 bis 4 dargestellt, lösbar mit dem Fänger 3 verbunden sein.

Das in den Figuren 1 bis 5 dargestellte Schliesselement 4 weist einen Aussendurchmesser im Bereich von vorzugsweise 8 bis 14 mm auf, und besonders vorteilhaft einen Aussendurchmesser im Bereich von 10 bis 12 mm. Das in den Figuren 6 bis 10 dargestellte Führungsmittel 6 weist einen Innendurchmesser im Bereich von vorzugsweise 8 bis 14 mm auf, und besonders vorteilhaft einen Innendurchmesser im Bereich von 10 bis 12 mm. Vorteilhafterweise sind alle jeweils in einem Poppetventil 1 angeordneten Schliesselemente 4 und/oder Führungsmittel 6 identisch ausgestaltet.

## Patentansprüche

1. Poppetventil (1) umfassend einen Ventilkörper (2) mit einer Mehrzahl von Durchlasskanälen (2a), einer Mehrzahl von Schliesselementen (4), einer Mehrzahl von Führungsmitteln (6), sowie einen Fänger (3), wobei jeder Durchlasskanal (2a) in einen Ventilsitz (7) mündet, wobei an jedem Führungsmittel (6) jeweils ein Schliesselement (4) in einer Hubrichtung (H) beweglich gelagert ist, wobei jedem Ventilsitz (7) in Hubrichtung (H) gegenüber liegend jeweils ein Schliesselement (4) zugeordnet ist, sodass jeder Ventilsitz (7) durch das jeweils zugeordnete Schliesselement (4) verschliessbar ist, wobei jedes Führungsmittel (6) in Hubrichtung (H) nacheinander folgend einen Führungsabschnitt (6a), einen Stützabschnitt (6b) und einen Befestigungsabschnitt (6c) umfasst, wobei jedes Führungsmittel (6) über den Befestigungsabschnitt (6c) mit dem Fänger (3) verbunden ist, wobei der Führungsabschnitt (6a) einen in Hubrichtung (H) verlaufenden Innenhohlraum (6d) umfasst, und wobei der Stützabschnitt (6b) eine Auflagefläche (6e) umfasst, wobei eine Feder (5) im Innenhohlraum (6d) des Führungsabschnittes (6a) verläuft und zwischen der Auflagefläche (6e) und dem Schliesselement (4) eingespannt ist, und wobei das Führungsmittel (6) einen einzigen Führungsabschnitt (6a) aufweist, der sich in Hubrichtung (H) erstreckt,
**dadurch gekennzeichnet, dass** jedes Führungsmittel (6) eine zum Ventilsitz (7) hin ausgerichtete erste Anschlagfläche (6f) aufweist, dass jedes Schliesselement (4) eine zur ersten Anschlagfläche (6f) hin ausgerichtete zweite Anschlagfläche (4e) aufweist, dass die erste und zweite Anschlagfläche (6f, 4e) derart zusammenwirkend angeordnet sind, dass diese den maximalen Hub des Schliesselementes (4) in Hubrichtung (H) begrenzen, und dass der Befestigungsabschnitt (6c) eine in beide Richtungen der Hubrichtung (H) wirkende, formschlüssige Verbindung zum Fänger (3) ausbildet.

2. Poppetventil nach Anspruch 1, **dadurch gekennzeichnet, dass** der Fänger (3) in Hubrichtung (H) eine konstante Breite aufweist.

3. Poppetventil nach Anspruch 2, **dadurch gekennzeichnet, dass** der Fänger (3) aus einem tafelförmigen Material besteht.

4. Poppetventil nach einem der vorhergehenden Ansprüche, **dadurch gekennzeichnet, dass** der Führungsabschnitt (6a) hohlzylinderförmig ausgestaltet ist und eine in Hubrichtung (H) verlaufende erste Gleitfläche (6g) aufweist, und dass das Schliesselement (4) eine in Hubrichtung (H) verlaufende zweite Gleitfläche (4a) aufweist, wobei die erste und die zweite Gleitfläche (6g, 4a) gegengleich ausgestaltet sind, sodass jedes Schliesselement (4) am zugeordneten Führungsmittel (6) über die erste und zweite Gleitfläche (6g, 4a) in Hubrichtung (H) beweglich gelagert ist.

5. Poppetventil nach Anspruch 4, **dadurch gekennzeichnet, dass** eine zylinderförmige Aussenfläche des Führungsabschnittes (6a) die erste Gleitfläche (6g) ausbildet, und dass das Schliesselement (4) ein hohlzylinderförmiges Führungsteil (4c) umfasst, dessen Innenfläche die zweite Gleitfläche (4a) ausbildet.

6. Poppetventil nach Anspruch 5, **dadurch gekennzeichnet, dass** das Schliesselement (4) einteilig ausgestaltet ist und einen Schliesskopf (4b) sowie das anschliessend an den Schliesskopf (4b) in Hubrichtung (H) verlaufende hohlzylinderförmige Führungsteil (4c) umfasst, wobei der Schliesskopf (4b) die zweite Anschlagfläche (4e) umfasst.

7. Poppetventil nach Anspruch 5 oder 6, **dadurch gekennzeichnet, dass** der Führungsabschnitt (6a) eine zum Ventilkörper (2) hin ausgerichtete Stirnseite aufweist, welche die erste Anschlagfläche (6f) ausbildet.

8. Poppetventil nach Anspruch 5, **dadurch gekennzeichnet, dass** das Schliesselement (4) aus einem Metall, insbesondere aus einem tiefgezogenen Metall besteht, dass das Schliesselement (4) eine Wandstärke im Bereich von 0,25 mm bis 1,5 mm und insbesondere eine Wandstärke im Bereich von 0,3 mm bis 1 mm aufweist, und dass die erste Anschlagfläche (6f) radial zur Hubrichtung (H) eine Breite aufweist, die mindestens doppelt so gross ist wie die Wandstärke des Schliesselements (4).

9. Poppetventil nach Anspruch 8, **dadurch gekennzeichnet, dass** das Führungsmittel (6) aus einem Kunststoff besteht.

10. Poppetventil nach Anspruch 9, **dadurch gekennzeichnet, dass** der Befestigungsabschnitt (6c) ein Einrastverbindungsteil (6h) umfasst.

11. Poppetventil nach Anspruch 4, **dadurch gekennzeichnet, dass** eine Innenfläche des Führungsabschnittes (6a) die erste Gleitfläche (6g) ausbildet, und dass das Schliesselement (4) ein hohlzylinderförmiges Führungsteil (4c) umfasst, dessen Aussenfläche die zweite Gleitfläche (4a) ausbildet, sodass das Schliesselement (4) in Hubrichtung (H) zumindest teilweise innerhalb des Führungsmittels (6) angeordnet ist.

12. Poppetventil nach Anspruch 8, **dadurch gekennzeichnet, dass** das Schliesselement (4) einteilig ausgestaltet ist und einen Schliesskopf (4b) sowie das anschliessend an den Schliesskopf (4b) in Hubrichtung (H) verlaufende hohlzylinderförmige Führungsteil (4c) umfasst, wobei das hohlzylinderförmige Führungsteil (4c) eine bezüglich dem Ventilkörper (2) abgewandte Stirnseite aufweist, welche die zweite Anschlagfläche (4e) umfasst.

13. Poppetventil nach Anspruch 8 oder 9, **dadurch gekennzeichnet, dass** das Führungsmittel (6), ausgehend vom Fänger (3) zum Ventilkörper (2) hin, zuerst den Stützabschnitt (6b) und nachfolgend den Führungsabschnitt (6a) aufweist, wobei der Stützabschnitt (6b) die zum Ventilkörper (2) hin ausgerichtete erste Auflagefläche (6f) umfasst.

14. Poppetventil nach einem der Ansprüche 1 bis 3, **dadurch gekennzeichnet, dass** der Fänger (3) als eine ebene Gitterstruktur ausgestaltet ist, umfassend Gitterknoten (3a) und diese verbindende Streben (3b), wobei die Gitterknoten (3a) zur Befestigung der Führungsmittel (6) ausgestaltet sind.

15. Poppetventil nach einem der vorhergehenden Ansprüche, ausgestaltet als Bausatz umfassend den Ventilkörper (2) sowie umfassend den Fänger (3) mit daran befestigten Führungsmitteln (6), sowie umfassend eine Mehrzahl von Schliesselementen (4) und Federn (5).

## Claims

1. Poppet valve (1) comprising a valve body (2) with a plurality of passage channels (2a), a plurality of closing elements (4), a plurality of guide means (6), and a catcher (3), each passage channel (2a) opening into a valve seat (7), a closing element (4) being mounted on each guide means (6) so as to be movable in a stroke direction (H), wherein a respective closing element (4) is associated with each valve seat (7) opposite in the stroke direction (H), so that each valve seat (7) can be closed by the respectively associated closing element (4), wherein each guide means (6) successively comprises in the stroke direction (H) a guide section (6a), a support section (6b) and a fastening section (6c), wherein each guide means (6) is connected to the catcher (3) via the fastening section (6c), wherein the guide section (6a) comprises an inner cavity (6d) extending in the stroke direction (H), and wherein the support section (6b) comprises a bearing surface (6e), wherein a spring (5) extends in the inner cavity (6d) of the guide section (6a) and is clamped between the support surface (6e) and the closing element (4), and wherein the guide means (6) comprises a single guide section (6a) extending in the stroke direction (H),
**characterized in that** each guide means (6) has a first stop surface (6f) oriented toward the valve seat (7), that each closing element (4) has a second stop surface (4e) oriented toward the first stop surface (6f), that the first and second stop surfaces (6f, 4e) are arranged to cooperate in such a way that they limit the maximum stroke of the closing element (4) in the stroke direction (H), and **in that** the fastening section (6c) forms a positive connection to the catcher (3) which acts in both directions of the stroke direction (H).

2. Poppet valve according to claim 1, **characterized in that** the catcher (3) has a constant width in the stroke direction (H).

3. Poppet valve according to claim 2, **characterized in that** the catcher (3) is made of a tabular material.

4. Poppet valve according to one of the preceding claims, **characterized in that** the guide section (6a) is of hollow-cylindrical design and has a first sliding surface (6g) extending in the stroke direction (H), and **in that** the closing element (4) has a second sliding surface (4a) extending in the stroke direction (H), wherein the first and the second sliding surfaces (6g, 4a) are configured in opposite directions, so that each closing element (4) is movably mounted on the associated guide means (6) via the first and second sliding surfaces (6g, 4a) in the stroke direction (H).

5. A poppet valve according to claim 4, **characterized in that** a cylindrical outer surface of the guide portion (6a) forms the first sliding surface (6g), and **in that** the closing element (4) comprises a hollow cylindrical guide member (4c) whose inner surface forms the second sliding surface (4a).

6. Poppet valve according to claim 5, **characterized in that** the closing element (4) is designed in one piece and comprises a closing head (4b) as well as the hollow-cylindrical guide member (4c) extending in the stroke direction (H) adjoining the closing head (4b), the closing head (4b) comprising the second stop surface (4e).

7. Poppet valve according to claim 5 or 6, **characterized in that** the guide section (6a) has an end face oriented towards the valve body (2), which forms the first stop face (6f).

8. Poppet valve according to claim 5, **characterized in that** the closing element (4) is made of a metal, in particular of a deep-drawn metal, **in that** the closing element (4) has a wall thickness in the range from 0.25 mm to 1.5 mm and, in particular, a wall thickness in the range from 0.3 mm to 1 mm, and **in that** the first stop surface (6f) has, radially with respect to the stroke direction (H), a width which is at least twice as large as the wall thickness of the closing element (4).

9. Poppet valve according to claim 8, **characterized in that** the guide means (6) is made of a plastic.

10. A poppet valve according to claim 9, **characterized in that** said fixing portion (6c) comprises a snap-in connecting part (6h).

11. Poppet valve according to claim 4, **characterized in that** an inner surface of the guide section (6a) forms the first sliding surface (6g), and **in that** the closing element (4) comprises a hollow-cylindrical guide member (4c) whose outer surface forms the second sliding surface (4a), so that the closing element (4) is arranged at least partially inside the guide means (6) in the stroke direction (H).

12. Poppet valve according to claim 8, **characterized in that** the closing element (4) is designed in one piece and comprises a closing head (4b) as well as the hollow-cylindrical guide member (4c) extending in the stroke direction (H) adjoining the closing head (4b), the hollow-cylindrical guide member (4c) having an end face facing away from the valve body (2), which end face comprises the second stop face (4e).

13. Poppet valve according to claim 8 or 9, **characterized in that** the guide means (6), starting from the catcher (3) towards the valve body (2), comprises first the support section (6b) and subsequently the guide section (6a), the support section (6b) comprising the first bearing surface (6f) oriented towards the valve body (2).

14. Poppet valve according to any one of claims 1 to 3, **characterized in that** the catcher (3) is designed as a planar lattice structure comprising lattice nodes (3a) and struts (3b) connecting them, the lattice nodes (3a) being designed for fixing the guide means (6).

15. Poppet valve according to one of the preceding claims, designed as a kit comprising the valve body (2) and comprising the catcher (3) with guide means (6) attached thereto, and comprising a plurality of closing elements (4) and springs (5).

## Revendications

1. Soupape à clapet (1) comprenant un corps de soupape (2) avec une pluralité de canaux de passage (2a), une pluralité d'éléments de fermeture (4), une pluralité de moyens de guidage (6), ainsi qu'un capteur (3), chaque canal de passage (2a) débouchant dans un siège de soupape (7), un élément de fermeture (4) étant respectivement monté mobile dans un sens de la course (H) sur chaque moyen de guidage (6), un élément de fermeture (4) étant associé à chaque siège de soupape (7) en face de celui-ci dans le sens de la course (H), de sorte que chaque siège de soupape (7) peut être fermé par l'élément de fermeture (4) associé, chaque moyen de guidage (6) comportant successivement dans le sens de la course (H) une section de guidage (6a), une section d'appui (6b) et une section de fixation (6c), chaque moyen de guidage (6) étant relié au capteur (3) par l'intermédiaire de la section de fixation (6c), la section de guidage (6a) comprenant une cavité intérieure (6d) s'étendant dans le sens de la course (H), et la section d'appui (6b) comprenant une surface d'appui (6e), un ressort (5) s'étendant dans la cavité intérieure (6d) de la section de guidage (6a) et étant serré entre la surface d'appui (6e) et l'élément de fermeture (4), et le moyen de guidage (6) présentant une seule section de guidage (6a) qui s'étend dans le sens de la course (H),
**caractérisé en ce que** chaque moyen de guidage (6) présente une première surface de butée (6f) orientée vers le siège de soupape (7), **en ce que** chaque élément de fermeture (4) présente une deuxième surface de butée (4e) orientée vers la première surface de butée (6f), **en ce que** la première et la deuxième surface de butée (6f, 4e) sont disposées de manière à coopérer de telle sorte qu'elles limitent la course maximale de l'élément de fermeture (4) dans le sens de la course (H), et **en ce que** la section de fixation (6c) forme une liaison par complémentarité de forme avec le capteur (3), qui agit dans les deux directions du sens de la course (H).

2. Soupape à clapet selon la revendication 1, **caractérisée en ce que** le capteur (3) présente une largeur constante dans le sens de la course (H).

3. Soupape à clapet selon la revendication 2, **caractérisée en ce que** le capteur (3) est constitué d'un matériau tabulaire.

4. Soupape à clapet selon l'une des revendications précédentes, **caractérisée en ce que** la section de guidage (6a) est réalisée en forme de cylindre creux et présente une première surface de glissement (6g) s'étendant dans le sens de la course (H), et **en ce que** l'élément de fermeture (4) présente une deuxième surface de glissement (4a) s'étendant dans la direction de course (H), la première et la deuxième surface de glissement (6g, 4a) étant conçues de manière opposée, de sorte que chaque élément de fermeture (4) est monté sur le moyen de guidage (6) associé de manière mobile dans le sens de la course (H) par l'intermédiaire de la première et de la deuxième surface de glissement (6g, 4a).

5. Soupape à clapet selon la revendication 4, **caractérisée en ce qu'**une surface extérieure cylindrique de la section de guidage (6a) forme la première surface de glissement (6g), et **en ce que** l'élément de fermeture (4) comprend une partie de guidage (4c) en forme de cylindre creux, dont la surface intérieure forme la deuxième surface de glissement (4a).

6. Soupape à clapet selon la revendication 5, **caractérisée en ce que** l'élément de fermeture (4) est réalisé d'une seule pièce et comprend une tête de fermeture (4b) ainsi que la partie de guidage (4c) en forme de cylindre creux s'étendant à la suite de la tête de fermeture (4b) dans le sens de la course (H), la tête de fermeture (4b) comprenant la deuxième surface de butée (4e).

7. Soupape à clapet selon la revendication 5 ou 6, **caractérisée en ce que** la section de guidage (6a) présente une face frontale orientée vers le corps de valve (2), qui forme la première surface de butée (6f).

8. Soupape à clapet selon la revendication 5, **caractérisée en ce que** l'élément de fermeture (4) est constitué d'un métal, en particulier d'un métal embouti, **en ce que** l'élément de fermeture (4) présente une épaisseur de paroi dans la plage de 0,25 mm à 1,5 mm et en particulier une épaisseur de paroi dans la plage de 0,3 mm à 1 mm, et **en ce que** la première surface de butée (6f) présente radialement par rapport au sens de la course (H) une largeur qui est au moins deux fois plus grande que l'épaisseur de paroi de l'élément de fermeture (4).

9. Soupape à clapet selon la revendication 8, **caractérisée en ce que** le moyen de guidage (6) est constitué d'une matière plastique.

10. Soupape à clapet selon la revendication 9, **caractérisée en ce que** la partie de fixation (6c) comprend une partie de connexion par encliquetage (6h).

11. Soupape à clapet selon la revendication 4, **caractérisée en ce qu'**une surface intérieure de la section de guidage (6a) forme la première surface de glissement (6g), et **en ce que** l'élément de fermeture (4) comprend une partie de guidage (4c) en forme de cylindre creux, dont la surface extérieure forme la deuxième surface de glissement (4a), de sorte que l'élément de fermeture (4) est disposé au moins partiellement à l'intérieur du moyen de guidage (6) dans le sens de la course (H).

12. Soupape à clapet selon la revendication 8, **caractérisée en ce que** l'élément de fermeture (4) est réalisé d'une seule pièce et comprend une tête de fermeture (4b) ainsi que la partie de guidage (4c) en forme de cylindre creux s'étendant à la suite de la tête de fermeture (4b) dans le sens de la course (H), la partie de guidage (4c) en forme de cylindre creux présentant une face frontale opposée au corps de soupape (2), qui comprend la deuxième surface de butée (4e).

13. Soupape à clapet selon la revendication 8 ou 9, **caractérisée en ce que** le moyen de guidage (6) présente, en partant du capteur (3) vers le corps de soupape (2), d'abord la section de support (6b) et ensuite la section de guidage (6a), la section de support (6b) comprenant la première surface de butée (6f) orientée vers le corps de soupape (2).

14. Soupape à clapet selon l'une des revendications 1 à 3, **caractérisée en ce que** le capteur (3) est conçu comme une structure de grille plane, comprenant des noeuds de grille (3a) et des entretoises (3b) reliant ceux-ci, les noeuds de grille (3a) étant conçus pour fixer les moyens de guidage (6).

15. Soupape à clapet selon l'une des revendications précédentes, conçue sous forme de kit comprenant le corps de soupape (2) ainsi que comprenant le capteur (3) avec des moyens de guidage (6) qui y sont fixés, ainsi que comprenant une pluralité d'éléments de fermeture (4) et de ressorts (5).
